# EUROPEAN PATENT SPECIFICATION

(11) **EP 1 562 446 B1**
(45) Date of publication and mention of the grant of the patent: **03.01.2007**
(21) Application number: 03769061.7
(22) Date of filing: 03.11.2003
(51) Int. Cl.: A23L 1/025, A23L 1/212, A23L 1/24

(54) **METHOD OF TREATMENT OF VEGETABLE MATTER WITH ULTRASONIC ENERGY**
VERFAHREN ZUR BEHANDLUNG VON PFLANZLICHEM MATERIAL MIT ULTRASCHALLENERGIE
PROCEDE DE TRAITEMENT D'UNE MATIERE VEGETALE A L'ENERGIE ULTRASONORE

(30) Priority: 01.11.2002 AU 2002952457
(43) Date of publication of application: 17.08.2005
(73) Proprietor: Mars Incorporated, McLean, Virginia 22101 (US); COMMONWEALTH SCIENTIFIC AND INDUSTRIAL RESEARCH ORGANISATION, Campbell ACT 2602 (AU)
(72) Inventor: BATES, Darren, Miles, Tewantin, QLD 4565 (AU); BAGNALL, Warwick, Anthony, Gwandalan, NSW 2259 (AU); BRIDGES, Michael, William, Wamberal, NSW 2260 (AU)
(74) Representative: Rees, David Christopher
(86) International application number: PCT/AU2003/001454
(87) International publication number: WO 2004/039175

(56) References cited:
- DE-A1- 19 609 703
- GB-A- 1 048 324
- US-A- 4 460 619
- DATABASE CA [Online] XP002990400 Database accession no. 79:64846 & ES 384 195 A
- DATABASE CA [Online] BERK Z. AND MIZRAHI S.: 'A new method for preparing low-viscosity concentrated orange juices by means of ultrasonic irradiation', XP002994037 Database accession no. 65:6971 & CONSERVE. DERIV. AGRUMARI. vol. 14, no. 2, 1965, pages 55 - 59
- MIZRAHI S. AND BERK.Z: 'Ultrasonic waves in the concentration of citrus juices' PROCESS BIOCHEMISTRY 1968, pages 25 - 27, XP008058782

## Description

### FIELD OF THE INVENTION

The present invention relates to the commercial processing of plant-based food materials. In particular, the invention relates to the use of low frequency ultrasonic energy to modify the viscosity of purees of plant-based food products.

### BACKGROUND OF THE INVENTION

The rheology, and especially the viscosity, of plant-derived food products, for example tomato based products such as pasta sauce, salsa, tomato sauce and ketchup, is a key parameter in determining consumer acceptance of the food product. This is due to the influence of viscosity on visual appearance, mouth-feel and flavour release. Part of the viscosity profile of the food product is derived from insoluble tomato solids consisting of pectins, hemicelluloses, cellulose, proteins and lignin. These insoluble components exist in a continuous aqueous matrix of soluble pectins, organic acids, sugars and salts.

However, in most applications, these naturally present viscosity-modifying compounds are not sufficient to provide the optimum aesthetic the viscosity for such products, and so must be augmented by the use of thickening agents, such as starches (e.g. waxy maize starch) and gums such as carrageenan and guar. The disadvantage of this is that these ingredients are expensive, require specialised handling and processing and may have a deleterious effect on flavour. Therefore, it would be advantageous to be able to provide target vegetable paste rheology with minimal use of such additives.

Alternatively, the rheology of the paste may be augmented by increasing the vegetable matter content of the product. However, this will tend to lead to unacceptable increase in formulation cost where these products are manufactures on a commercial/industrial scale.

Other methods of modifying the viscosity of plant-derived material have been investigated. Changing consistency and texture of vegetable and fruit products by subjecting purees to high shear has been attempted in the art. This is conventionally performed using a pressure homogeniser or mill. It is known that the primary mechanism for consistency change due to high shear is a combination of size reduction and particle morphology change of the water insoluble fraction. High shear has no significant effect on the viscosity of the soluble fraction.

However, the action of high-shear mechanical homogenisers on breakdown of the cellular structures of vegetable matter tends to be limited to disruption of overall cellular structure, which itself does not tend to bring about sufficient viscosity change to obviate the need for additional texture modifying agents, such as those discussed above, especially for concentrated food purees. Such processes may have a limited viscosity modifying effect in higher moisture content products, such as fruit juices. This lack of effectiveness for higher solids purees is due to the limited level of localised pressure fluctuations that can be produced by these processes, usually in the order of 400 kPa for high-shear mechanical homogenisers.

The use of sound wave energy to effect breakdown of cellular structure of vegetable matter was disclosed in US Patent Document No. 2,598,374. Sound waves in the range 280 kHz to 300 kHz were used to effect disruption of cell structure in pureed vegetable matter, and some effect on viscosity was observed. However, sound wave energy at these frequencies are known not to be able to penetrate into higher solids content vegetable purees, such as those used to manufacture tomato-based pasta sauces.

### SUMMARY OF THE INVENTION

Therefore, it is an object of the present invention to provide a method for producing viscosity modulation of pureed vegetable pastes, without the need to add exogenous viscosity modifiers or to increase the vegetable matter content of the paste to commercially unfeasible levels.

According to one aspect of the invention, there is provided a method for modifying the viscosity of pureed vegetable matter, said method including the step of applying low-frequency ultrasonic energy (having a frequency in the range from about 16 kHz to 100 kHz) to said puree via a sonotrode, wherein cavitation of water substance in said puree is induced, thereby to degrade the cellular structure of the vegetable matter and to degrade the cell wall material of the vegetable matter.

Ultrasound is defined in the art as sound waves having a frequency above the threshold of human hearing. It can be subdivided into three frequency ranges:
Low frequency, or 'Power' ultrasound: 16 - 100kHz;
High frequency ultrasound: 100kHz - 1 MHz; and
Diagnostic ultrasound: 1 - 10MHz.

Low frequency ultrasound energy effects chemical or mechanical changes by generating micro-bubbles within an aqueous liquid/slurry reaction medium, a process called cavitation. The sound acts as a source of vibrational energy, which causes the molecules in the liquid to vibrate. This alternately compresses and stretches the liquid's structure to produce steam bubbles, as the internal fluid pressure instantaneously drops below the vapour pressure at the local temperature.

These bubbles are then subjected to the same vibrational stresses within the liquid and the bubbles eventually collapse. The thermodynamic conditions within these collapsing bubbles can be extreme, with temperatures of 5000K and pressures of up to 2000 atmospheres being achieved. As they collapse, the bubbles release energy. This is the energy that is utilized by the invention to effect changes in the structure of the vegetable material, in turn affecting its rheology.

The method according to the invention advantageously allows target viscosity to be achieved without necessarily using thickening additives, as it has been found that a low-frequency ultrasonic standing wave treatment of either the vegetable component of the food product, or of the whole food product, results in an increase in product viscosity. The exact mechanism for this viscosity increase is not precisely known, but it is suspected that the energy released during collapse of the cavitation bubbles increases the surface area of the insoluble components of the vegetable cell structure, resulting in an increased interaction between the insoluble solids and the continuous aqueous matrix and also between neighbouring insoluble particles, such as an increased ability for the insoluble molecules to absorb water molecules.

Some of the specific advantages offered by this method of modifying vegetable puree rheology include:
- a reduction in the concentration of vegetable solids, without a corresponding reduction in product viscosity. This reduces the cost of product formulation;
- improving the mouth-feel of a product and hence improving consumer preference by the presentation of a 'pulpier' product texture;
- increasing the viscosity of a product and hence its perceived value; and
- as viscosity has a large influence on a products flavour release, by altering the viscosity characteristics, it is possible to present a more positive flavour release. An example of this is the reduction in perceived sourness of tomato sauce following ultrasonic treatment.

The level of actual penetration of the energy to the internal structure of the vegetable material has a great influence over the success of the process. Prior art methods, which utilise the concept of relatively high-frequency transducers clamped, bolted or welded to the outside of steel vessels or chambers, are of little use in the processing of vegetable purees, as this concept allows only the creation of low energy, low efficiency sonic waves in the liquid or food, thus allowing only outer surface treatment of the matter in such vessels. There is relatively little effective penetration of standing wave energy into the food structure, allowing limited cell material breakdown, and concomitantly lower levels of thickening.

For example, the energy intensity associated with high frequency standing/stationary ultrasound wave energy is only in the region 0.001 Watt/cm³ which is insufficient to achieve penetration into the food product mass. In contrast, the introduction of high intensity transducers or sonotrodes, directly into the puree, enables the supply of low frequency standing waves directly to the liquid component of the puree, producing energy intensities of between 1 W/cm³ and 1000 W/cm³, thus allowing penetration of standing waves throughout the food product, whether in batch or continuous flow situations.

In addition, the hydrophobicity of the plant surface layer of some purees means that cavitation may not be achievable at the plant molecule surface, especially where prior art apparatus is used. Therefore, immersion of the low-frequency sonotrode in the puree itself is particularly advantageous as it then is capable of delivering a higher energy intensity ultrasonic wave into direct contact with the plant structure surface, facilitating more efficient energy transfer into the product. This sonotrode positioning has the additional advantage of the creation of high velocity 'microstreaming' of fluid surrounding the plant material surface. 'Microstreaming' is effectively localised water micro-currents reaching speeds of up to 780 km/hr, which assist the transfer of energy to the plant cell structure.

More preferably, the sonotrode is capable of delivering ultrasound waves having an amplitude of between 1 and 500 micron, as these amplitudes will tend to provide still greater efficiency of energy transfer to the vegetable material.

Advantageously, the sonotrode is a radial sonotrode, for example a cylindrical sonotrode which emits the ultrasonic energy radially (ie perpendicular to its axis). Alternatively, the sonotrode is a focussed sonotrode, for example a cylindrical sonotrode which emits the ultrasonic energy from its extremity (ie parallel to its axis). Suitable materials of manufacture of the sonotrode include titanium, aluminium, steel, hastalloy, ceramic material and glass.

In particular, where the ultrasonic energy can be supplied at the frequency, appropriate to the vegetable material, to produce a resonant standing wave (the 'ultrasonic resonance frequency' of the material), the efficiency of penetration of the energy into the structure of the material is greatly enhanced.

Accordingly, improved performance of the inventive method may be achieved by the introduction of an automatic frequency scanning system for different types of products. Varying puree material parameters, such as solids concentration, viscosity and the relative composition of plant materials in the puree, will affect the ultrasonic resonance frequency of the puree. The ultrasonic resonance frequency is the frequency at which it is possible to achieve a standing ultrasonic wave in the material, and at which the most effective penetration of energy to the cell structure will be achieved. In fact, as the puree structure breaks down during ultrasonic treatment, the ultrasonic resonance frequency may change due to the changing composition of the puree.

Therefore, it is especially advantageous to provide an automatic frequency scanning system in conjunction with said sonotrode, so that said method also includes the steps of:
actuating said automatic frequency scanning system to scan said puree for the ultrasonic resonance frequency, being the frequency at which said puree will support a standing wave of ultrasonic energy; and
adjusting the ultrasonic wave frequency delivered by the sonotrode to match said ultrasonic resonance frequency.

In operation, the ultrasonic system may be actuated to detect the resonance frequency of the specific product, and then re-scan for the new resonance frequency every 0.001 second throughout the treatment process. If the ultrasonic unit does not have the resonance frequency tracking system for different products, then where there is as little as 10 Hz variation from the resonance frequency, this may result in a drop in energy efficiency of the process in the order of 10 - 40%. For example, the resonance frequency of lettuce is typically about 20,350 Hz, whereas tomato sauce will have a typical resonance frequency of about 20,210Hz.

The method defined above has been found to be particularly useful where the vegetable puree is made up at least partly of tomato puree. In particular, the inventive method is advantageous where the vegetable matter is a tomato puree containing between 4°Brix and 36°Brix net total tomato solids. Such products include, but are not limited to tomato sauce, pasta sauce, salsa and ketchup.

For tomato-based purees, or other purees containing pectin, it is preferred that the puree is heated to a temperature in the range 65°C to 80°C prior to the application of the ultrasonic energy. This is thought to melt the pectin material in the puree and assist in the breakdown of the puree cellular material.

The performance of the sonotrode can be enhanced where the puree is placed under an overpressure, particularly an overpressure of between 0.1 Bar and 10 Bar. Overpressure tends to causes an increase in load on the ultrasonic transducer and this produces a greater draw of energy therefrom, which can assist in improving the energy efficiency of the process.

According to another aspect of the invention, there is provided apparatus for increasing the viscosity of pureed vegetable matter, via the application of a standing wave of low-frequency ultrasonic energy, said energy having a frequency in the range from about 16 kHz to 100 kHz, to said puree, said apparatus including a sonotrode, wherein said sonotrode induces cavitation of water substance in said puree, thereby to degrade the cellular structure of the vegetable matter and optionally the cell wall material of the vegetable matter.

Preferably, the apparatus and/or the puree conforms to any described above.

Preferably, said apparatus is capable of being retrofitted to a bath, trough, chamber, pipe, flow cell or other vessel capable of containing or transporting said puree for use in modifying the viscosity of said puree.

Advantageously, the apparatus may be used to modify the viscosity of vegetable puree as said puree flows in a continuous manner through a fluid flow conduit, such as a pipe.

Now will be described, by way of a specific, non-limiting example, an exemplary embodiment of a method according to the invention.

### DETAILED DESCRIPTION OF A PREFERRED EMBODIMENT

The usefulness of ultrasonic energy in processing vegetable puree material depends upon two main criteria being met: a liquid medium must be present in the puree (even if the liquid element forms only 5% of the overall puree mass) and a source of high-energy vibrations (the ultrasound). Typically, the vibrational energy source will be a transducer of which there are two main types: piezoelectric and magnetostrictive, the latter being less adaptable but more powerful than the former. Piezoelectric transducers are the most commonly used. The transducer is functionally connected to a sonotrode, which is the part of the apparatus which physically delivers the ultrasonic energy to the puree.

In order to effect the inventive method it is necessary for the sonotrode to be brought into contact with the puree material, whether as a stationary batch or as a continuously flowing material in a conduit, and to actuate the energy supply to the puree via the transducer.

A permanent viscosity increase in the puree is generally obtained as a result of the application of ultrasonic energy.

A summary of the actual mechanism of the physico-chemical change in the structure of the vegetable material is given in the preceding section.

The second factor is the application of fluid shear after the ultrasonic treatment. Fluid shear reduces viscosity, presumably by promoting contact of insoluble component with itself, allowing it to re-bond rather than to bond with the continuous aqueous matrix.

An outline of typical commercially available equipment that may be used to carry the invention into effect includes:
A power source;
a transducer converting electric energy into mechanical vibrational energy;
a sonotrode, which transmits the vibrational energy into the puree.

The sonotrode may provide either radial wave, stationary wave or focused emission, depending on the specific application. The sonotrode material can be made of titanium (preferentially) or alternatively ceramic, steel, hastalloy, aluminium or glass. The transducer system may be a PZT (piezo ceramic transducer), a Terfenol-D magnetostrictive transducer or a Nickel/Iron/Vanadium magnetostrictive material.

The transducers/power supply should have an individual power ranging from 100 W to 8000 W, or higher. The power supplies of most commercially available transducers have automatic resonance frequency tracking, so that when the equipment is running during the thickening process, the unit is also always scanning the new resonance frequency (relates to maximum power output) due to changes in the puree's chemical composition.

The sonotrodes/transducers can be mounted or retrofitted to tanks, vessels (round, square or oval), troughs, pipes, or flow-cells containing the tomato based products.

Radial sonotrodes may be fitted longitudinally or laterally within an open tank, trough or flume. Reflector shields may be positioned at the base to reflect and or focus ultrasonic energy into the product flow path, which may be at the solvent surface or immersed below the surface.

Radial sonotrodes may be fitted in closed flow through cells. The sonotrode design may be modified to enhance the thickening efficiency of the ultrasonic energy. The inclusion of reflector shields may also assist in improving the efficiency of the process.

Focused sonotrodes may also be fitted in a flow-through cell, where the puree flows either directly into the face of, or across the face of, the sonotrode. Residence time can be controlled by regulating the micro-streaming flow from the sonotrode, the puree flow rate and by selecting appropriate cell dimensions.

Occasionally, a reduction in the viscosity of the puree may be observed after the ultrasonic treatment. Two factors have been observed to affect the extent of this viscosity decrease. The first of these is the composition of the continuous aqueous matrix. It is hypothesized that the insoluble fraction is partially electrostatically bonded and that sugars and salts present in the continuous aqueous matrix partially stabilize the increased surface area structure of the insoluble component, hindering its collapse. Raising the salt and particularly the sugar composition of the continuous aqueous phase hence reduces the viscosity reduction observed after the ultrasonic treatment.

### EXAMPLE

The market for tomato based products, such as pasta sauces, ketchup, salsa and tomato sauce is large and commercially significant. Product viscosity is a key parameter in determining consumer acceptance due to its influence on visual appearance, mouth-feel and flavour release.

Thus, the ability to either reduce reliance on exogenous texture modifiers, or alternatively to reduce formulation cost without sacrificing product aesthetics, is valuable.

By way of example, now will be described a comparative test between a standard formulation tomato ketchup (Ketchup A), and a lower cost formulation which is subjected to an ultrasonic treatment method according to the invention (Ketchup B). The formulations are given in Table 1.

**Table 1.**

| **Ingredient** | **Ketchup A** | **Ketchup B** |
|---|---|---|
| | (% mass) | (% mass) |
| Hot Break Tomato | 24.0 | 20.0 |
| Paste | | |
| (30°Brix) | | |
| Water | 47.2 | 51.2 |
| Salt | 2.41 | 2.41 |
| Spices | 0.13 | 0.13 |
| Clove Oil | 0.01 | 0.01 |
| Acetic Acid | 2.5 | 2.5 |
| (80% w/w aqueous) | | |
| Sugar | 23.75 | 23.75 |

Ketchup A was mixed using a conventional hand-blender, heated to 77°C and cooled to room temperature.

Ketchup B was mixed using a conventional hand-blender, heated to 77°C and treated with ultrasonic energy. The ultrasonic energy was supplied by a UP400S Sonicator, obtained from Dr. Hielscher GmbH, of Wartherstrasse 21, 14513 Teltow, Germany. The Sonicator was fitted with a H22D sonotrode, which was attached to a D22K flowcell. The heated Ketchup B was passed twice through the D22K flowcell at a flowrate of 0.38 kg/min, and under a pressure of 50kPa. The frequency of the ultrasonic energy was approximately 20 kHz during the treatment, and maximum amplitude of the ultrasonic equipment was applied. The treated Ketchup B was then cooled to room temperature.

Both formulations were then tested for viscosity on a Bostwick consistometer. Both formulations displayed a Bostwick consistency of 6.5 cm / 5 sec. For Ketchup B, this displayed an increase in viscosity from 11.5 cm / 5 sec from its pre-ultrasonic treatment state, an approximate viscosity increase of 43% via the ultrasonic treatment.

The sensory properties of both formulations were also assessed. The mouthfeel of both formulations was very similar, while Ketchup B had a preferable flavour to Ketchup A, displaying a less acidic flavour than the standard formulation.

Significantly, the Ketchup B formulation represents an approximately 10% raw material cost reduction compared with the Ketchup A formulation.

It has been observed that, for tomato based purees especially, increasing the temperature at which the ultrasonic treatment is carried out to above the pectin melting temperature (65°C to 80°C) significantly improves the viscosity increase obtained. The pectin fraction partially binds the insoluble matrix together and it would be expected that by partially melting this pectin fraction, the insoluble matrix is more easily torn apart.

Adding soluble components such as sugar and acetic acid to homogenised tomato products assists in stabilising the viscosity increase. This is most likely due to hydrogen bonding between the soluble components and the tomato cell fragments, preventing the fragment surfaces from re-compacting.

While the above example has dealt with tomato-based purees, it will be appreciated by those skilled in the art that the inventive processes and apparatus disclosed above can be applied with similar success to a wide variety of other plant-based materials, especially those whose cellular structure contains pectin.

## Claims

1. A method for modifying the viscosity of pureed vegetable matter, said method including the step of applying relatively low-frequency ultrasonic energy (having a frequency in the range from about 16 kHz to 100 kHz) to said puree via a sonotrode in a manner such that cavitation of a water fraction in said puree is induced, and the cellular structure and cell wall material of the vegetable matter are degraded, thereby to increase the viscosity of said puree.

2. The method of claim 1, wherein the application of the ultrasonic energy to said pureed vegetable matter is effected via a sonotrode inserted directly into said pureed vegetable matter.

3. The method of claim 2, wherein the sonotrode is a high-intensity sonotrode arranged to deliver an energy intensity equal to, or greater than, 1 W/cm³.

4. The method of any preceding claim, wherein the sonotrode is arranged to deliver ultrasound waves having an amplitude of between 1 and 500 micron.

5. The method of claim 4, wherein the sonotrode is a radial sonotrode.

6. The method of claim 4, wherein the sonotrode is a focussed sonotrode.

7. The method of any one preceding claim, further including: providing an automatic frequency scanning system in conjunction with said sonotrode; actuating said automatic frequency scanning system to scan said puree for an ultrasonic resonance frequency, being the frequency at which said puree will support a standing wave of ultrasonic energy; and adjusting the ultrasonic wave frequency delivered by the sonotrode to the puree to match said ultrasonic resonance frequency.

8. The method of any one preceding claim, wherein said vegetable puree is made up at least partly of tomato puree, said tomato puree preferably containing between 4°Brix and 36°Brix net total tomato solids.

9. The method of claim 8, wherein the tomato puree concentration is in the range of 12°Brix to 36°Brix.

10. The method of claim 8 or 9, wherein said puree is heated to a temperature in the range 65°C to 80°C prior to the application of the ultrasonic energy.

11. The method of claim 8, 9 or 10, wherein said puree is introduced to said sonotrode under an overpressure of between 0.1 Bar and 10 Bar.

12. The method of any one preceding claim, wherein the puree is processed to have up to 25% by mass of sugar, in order to assist in stabilising the viscosity of the puree post-ultrasonic treatment.

13. A vegetable puree obtainable by a method as defined in any preceding claim.

14. Apparatus for increasing the viscosity of pureed vegetable matter, via the application of relatively low-frequency ultrasonic energy to said puree, including: a bath, trough, chamber, pipe, flow cell or similar vessel arranged for containing or transporting said puree in a food processing plant; and a sonotrode arranged to deliver ultrasonic energy, with a frequency in the range from about 16 kHz to 100 kHz, to said puree in such manner as to induce cavitation of a water fraction in said puree and degrade the cellular structure and the cell wall material of the vegetable matter.

15. The apparatus of claim 14, wherein said sonotrode is arranged to be in direct contact with said pureed vegetable matter.

16. The apparatus of claim 15, wherein the sonotrode is a high-intensity sonotrode arranged to deliver an energy intensity equal to, or greater than, 1 W/cm³.

17. The apparatus of any one of claims 14 to 16, wherein the sonotrode is arranged to deliver ultrasound waves having an amplitude of between 1 and 500 micron.

18. The apparatus of claim 17, wherein the sonotrode is a radial sonotrode.

19. The apparatus of any of claims 14 to 18, further including: an automatic frequency scanning system arranged to scan said puree for ultrasonic resonance frequency, being the frequency at which said puree will support a standing wave of ultrasonic energy; and means for adjusting the ultrasonic wave frequency delivered by the sonotrode to match said ultrasonic resonance frequency.

20. The apparatus of any one of claims 14 to 19, wherein the sonotrode is manufactured from one or more materials selected from the group consisting of titanium, aluminium, steel, hastalloy, ceramic and glass.

21. The retrofitting of a sonotrode arranged to deliver ultrasonic energy having a frequency in a range from about 16KHz to 100KHz, to a bath, trough, chamber, pipe, flow cell or other vessel capable of containing or transporting a vegetable puree, for use in modifying the viscosity of said puree upon application of said ultrasonic energy to said puree.

## Patentansprüche

1. Verfahren zum Modifizieren der Viskosität von püriertem pflanzlichem Material, wobei das Verfahren den Schritt des Anwendens von relativ niederfrequenter Ultraschallenergie (weist eine Frequenz im Bereich von etwa 16 kHz bis 100 kHz auf) auf besagtes Püree mittels einer Sonotrode und zwar in einer Weise, so dass Kavitation eines Wasseranteils in diesem Püree induziert wird und die zelluläre Struktur und das Zellwand-Material des pflanzlichen Materials zerstört wird, um dadurch die Viskosität dieses Pürees zu erhöhen.

2. Verfahren nach Anspruch 1, wobei die Anwendung der Ultraschallenergie auf besagtes püriertes pflanzliches Material mittels einer Sonotrode erfolgt, die direkt in dieses pürierte pflanzliche Material eingefügt ist.

3. Verfahren nach Anspruch 2, wobei die Sonotrode eine Hochintensitätssonotrode ist, die ausgebildet ist, um eine Energieintensität von gleich oder größer als 1 W/cm³ abzugeben.

4. Verfahren nach einem der vorangehenden Ansprüche, wobei die Sonotrode ausgebildet ist, um Ultraschallwellen abzugeben, die eine Amplitude zwischen 1 und 500 Mikron aufweisen.

5. Verfahren nach Anspruch 4, wobei die Sonotrode eine Radialsonotrode ist.

6. Verfahren nach Anspruch 4, wobei die Sonotrode eine fokussierte Sonotrode ist.

7. Verfahren nach einem der vorangehenden Ansprüche, welches Verfahren weiters aufweist: Bereitstellen eines automatischen Frequenzabfragesystems in Verbindung mit besagter Sonotrode; Betätigen dieses automatischen Frequenzabfragesystems, um besagtes Püree auf eine Ultraschallresonanzfrequenz zu durchsuchen, welches jene Frequenz ist, bei der das besagte Püree eine stehende Ultraschallenergiewelle unterstützt; und Einstellen der Ultraschallwellenfrequenz, welche von der Sonotrode an das Püree abgegeben wird, um mit besagter Ultraschallresonanzfrequenz übereinzustimmen.

8. Verfahren nach einem der vorangehenden Ansprüche, wobei das besagte pflanzliche Püree zumindest teilweise aus Tomatenpüree besteht, wobei das Tomatenpüree vorzugsweise eine Nettosumme an Tomatenfeststoffen zwischen 4°Brix und 36°Brix enthält.

9. Verfahren nach Anspruch 8, wobei die Tomatenpüree-Konzentration im Bereich von 12°Brix bis 36°Brix liegt.

10. Verfahren nach Anspruch 8 oder 9, wobei besagtes Püree vor der Anwendung der Ultraschallenergie auf eine Temperatur von 65°C bis 80°C erwärmt wird.

11. Verfahren nach Anspruch 8, 9 oder 10, wobei besagtes Püree zu besagter Sonotrode unter einem Überdruck von zwischen 0,1 bar und 10 bar eingeführt wird.

12. Verfahren nach einem der vorangehenden Ansprüche, wobei das Püree bearbeitet wird, um bis zu 25 Gewichts% Zucker zu enthalten, um beim Stabilisieren der Viskosität des Pürees nach der Ultraschallbehandlung zu helfen.

13. Pflanzliches Püree, welches durch ein Verfahren nach einem der vorangehenden Ansprüche erhältlich ist.

14. Vorrichtung zum Erhöhen der Viskosität von püriertem pflanzlichen Material durch Anwenden von relativ niederfrequenter Ultraschallenergie auf besagtes Püree, einschließlich einem Bad, einer Wanne, einer Kammer, einer Rohrleitung, einer Durchflusszelle, oder einem ähnlichen Gefäß, welches so ausgebildet ist, dass es besagtes Püree in einer Lebensmittelverarbeitungsanlage enthalten oder transportieren kann; und eine Sonotrode, welches so ausgebildet ist, dass sie Ultraschallenergie mit einer Frequenz im Bereich von etwa 16 kHz bis 100 kHz an das besagte Püree abgibt, und zwar in einer solchen Weise, um eine Kavitation eines Wasseranteils im besagten Püree zu induzieren und die zelluläre Struktur und das Zellwand-Material des pflanzlichen Materials abzubauen.

15. Vorrichtung nach Anspruch 14, wobei die besagte Sonotrode angeordnet ist, um in direktem Kontakt mit besagtem pflanzlichem Material zu sein.

16. Vorrichtung nach Anspruch 15, wobei die Sonotrode eine Hochintensitätssonotrode ist, die ausgebildet ist, um eine Energieintensität von gleich oder größer als 1 W/cm³ abzugeben.

17. Vorrichtung nach einem der Ansprüche 14 bis 16, wobei die die Sonotrode ausgebildet ist, um Ultraschallwellen mit einer Amplitude zwischen 1 und 500 Mikron abzugeben.

18. Vorrichtung nach Anspruch 17, wobei die Sonotrode eine Radialsonotrode ist.

19. Vorrichtung nach einem der Ansprüche 14 bis 18, welche Vorrichtung weiters aufweist: ein automatisches Frequenzabfragesystem, welches ausgebildet ist, um besagtes Püree auf eine Ultraschallresonanzfrequenz zu durchsuchen, welches jene Frequenz ist, bei welcher das besagte Püree eine stehende Ultraschallenergiewelle unterstützt; und Mittel zum Einstellen der Ultraschallwellenfrequenz, welche von der Sonotrode abgegeben wird, um mit besagter Ultraschallresonanzfrequenz übereinzustimmen.

20. Vorrichtung nach einem der Ansprüche 14 bis 19, wobei die Sonotrode aus einem oder mehreren Materialien hergestellt ist, welche ausgewählt sind aus der Gruppe bestehend aus Titan, Aluminium, Stahl, Hastalloy, Keramik und Glass.

21. Nachrüsten einer Sonotrode, die ausgebildet ist, um eine Ultraschallenergie mit einer Frequenz im Bereich von etwa 16 kHz bis 100 kHz an ein Bad, eine Wanne, eine Kammer, eine Rohrleitung, eine Durchflusszelle, oder ein ähnliches Gefäß, welches ein pflanzliches Püree enthält oder transportiert, abzugeben, zur Verwendung zum Modifizieren der Viskosität des besagten Pürees durch die Anwendung von besagter Ultraschallenergie auf besagtes Püree.

## Revendications

1. Procédé pour modifier la viscosité d'une matière végétale en purée, ledit procédé incluant l'étape d'application d'une énergie ultrasonore à relativement basse fréquence (ayant une fréquence située dans une plage comprise entre environ 16 KHz à 100 KHz) à ladite purée via une sonotrode de telle manière à induire une cavitation de la fraction aqueuse de ladite purée et à dégrader la structure cellulaire et les parois cellulaires de la matière végétale, augmentant ainsi la viscosité de ladite purée.

2. Procédé selon la revendication 1, dans lequel l'application de l'énergie ultrasonore à ladite matière végétale en purée s'effectue via une sonotrode introduite directement dans ladite matière végétale en purée.

3. Procédé selon la revendication 2, dans lequel la sonotrode est une sonotrode à haute intensité réglée pour délivrer une énergie d'intensité égale ou supérieure à 1 W/cm³.

4. Procédé selon l'une quelconque des revendications précédentes, dans lequel la sonotrode est réglée pour délivrer des ondes ultrasonores ayant une amplitude comprise entre 1 et 500 micromètres.

5. Procédé selon la revendication 4, dans lequel la sonotrode est une sonotrode radiale.

6. Procédé selon la revendication 4, dans lequel la sonotrode est une sonotrode convergente.

7. Procédé selon l'une quelconque des revendications précédentes, incluant en outre: la mise à disposition d'un système de balayage automatique des fréquences en conjonction avec ladite sonotrode; la mise en fonctionnement dudit système de balayage automatique des fréquences pour balayer ladite purée à la recherche d'une fréquence de résonance ultrasonore, qui est la fréquence à laquelle ladite purée supportera une onde stationnaire d'énergie ultrasonore ; et l'ajustement de la fréquence de l'onde ultrasonore délivrée par la sonotrode à la purée pour correspondre à ladite fréquence de résonance ultrasonore.

8. Procédé selon l'une quelconque des revendications précédentes, dans lequel ladite purée végétale est faite, au moins en partie, de purée de tomates, ladite purée de tomates contenant de préférence entre 4°Brix et 36°Brix de chair de tomates du total net.

9. Procédé selon la revendication 8, dans lequel la concentration de la purée de tomates est située dans une plage comprise entre 12°Brix et 36°Brix.

10. Procédé selon la revendication 8 ou 9, dans lequel ladite purée est chauffée à une température située dans une plage comprise entre 65°C et 80°C avant l'application de l'énergie ultrasonore.

11. Procédé selon la revendication 8, 9 ou 10, dans lequel ladite purée est présentée à ladite sonotrode sous une surpression comprise entre 0,1 à 10 Bar.

12. Procédé selon l'une quelconque des revendications précédentes, dans lequel la purée est traitée de manière à comporter jusqu'à 25% en poids de sucre, afin d'aider à stabiliser la viscosité de la purée après le traitement ultrasonore.

13. Purée végétale pouvant être obtenue par un procédé selon l'une quelconque des revendications précédentes.

14. Appareil pour augmenter la viscosité d'une matière végétale en purée, via l'application à ladite purée d'une énergie ultrasonore à relativement basse fréquence, incluant: un bain, un plateau, une chambre, un tuyau, une cellule de flux ou un récipient similaire disposés pour contenir ou transporter ladite purée dans une usine de transformation alimentaire; et une sonotrode réglée pour délivrer à ladite purée une énergie ultrasonore à une fréquence située dans une plage comprise entre environ 16 KHz et 100 KHz, de manière à induire une cavitation de la fraction aqueuse de ladite purée et à dégrader les structures cellulaires et les parois cellulaires de la matière végétale.

15. Appareil selon la revendication 14, dans lequel ladite sonotrode est disposée pour être en contact direct avec ladite matière végétale en purée.

16. Appareil selon la revendication 15, dans lequel la sonotrode est une sonotrode à haute intensité réglée pour délivrer une énergie d'intensité égale ou supérieure à 1 W/cm³.

17. Appareil selon l'une quelconque des revendications 14 à 16, dans lequel la sonotrode est réglée pour délivrer des ondes ultrasonores ayant une amplitude comprise entre 1 et 500 micromètres.

18. Appareil selon la revendication 17, dans lequel la sonotrode est une sonotrode radiale.

19. Appareil selon l'une quelconque des revendications 14 à 18, incluant en outre: un système de balayage automatique des fréquences réglé pour balayer ladite purée à la recherche d'une fréquence de résonance ultrasonore, qui est la fréquence à laquelle ladite purée supportera une onde stationnaire d'énergie ultrasonore; et un moyen pour ajuster la fréquence de l'onde ultrasonore délivrée par la sonotrode à la purée pour correspondre à ladite fréquence de résonance ultrasonore

20. Appareil selon l'une quelconque des revendications 14 à 19, dans lequel la sonotrode est fabriquée à partir d'un ou plusieurs matériaux sélectionnés dans le groupe constitué par le titane, l'aluminium, l'acier, l'hastelloy, la céramique et le verre.

21. Rétro-ajustement d'une sonotrode réglée pour délivrer une énergie ultrasonore, ayant une fréquence située dans une plage comprise entre environ 16 KHz et 100 KHz, à un bain, un plateau, une chambre, un tuyau, une cellule de flux ou un récipient similaire capables de contenir ou de transporter une purée végétale, afin de modifier la viscosité de ladite purée par application de ladite énergie ultrasonore à ladite purée.
